# EUROPÄISCHE PATENTSCHRIFT

(11) **EP 0 467 876 B1**
(45) Veröffentlichungstag und Bekanntmachung des Hinweises auf die Patenterteilung: **01.06.1994**
(21) Anmeldenummer: 91890147.1
(22) Anmeldetag: 10.07.1991
(51) Int. Cl.: F24F 5/00, F24J 2/04

(54) **Hochhaus**
High-rise building
Bâtiment à plusieurs étages

(30) Priorität: 14.07.1990 DE 4022441
(43) Veröffentlichungstag der Anmeldung: 22.01.1992
(73) Patentinhaber: RLS-BAUTECHNOLOGIE AG, CH-9000 St. Gallen (CH)
(72) Erfinder: Jordan, Paul, Dipl.-Ing., W-7750 Konstanz (DE)
(74) Vertreter: Hübscher, Heiner, Dipl.-Ing.

(56) Entgegenhaltungen:
- EP-A- 0 090 794
- FR-A- 2 223 638

## Beschreibung

Die Erfindung bezieht sich auf ein Hochhaus mit einer Gebäudeaußenwand und einer dieser vorgelagerten Gebäudehülle, wobei die Gebäudehülle der Höhe nach verlaufende, unten und oben Ein- bzw. Austrittsöffnungen aufweisende Strömungskanäle zur Gebäudebe- und -entlüftung, Gebäudeklimatisierung od. dgl. bildet.

Aus der EP-B1-0 090 794 ist bereits ein Bauwerk mit einer Außenwand aus Wandkörper und einer diesem mit Abstand vorgelagerten Außenverkleidung bekannt, bei dem der Zwischenraum zwischen der Außenverkleidung und dem Wandkörper als Belüftungskanal ausgebildet ist, in dem sich Steuerorgane zum wahlweisen Öffnen und Absperren dieser Belüftungskanäle befinden. Um hier die Außenwand-Wärme-isolierung auch im Bereich von Fenster- oder Türöffnungen an die Außenbedingungen hinsichtlich der Temperatur und der Sonneneinstrahlung anpassen zu können, sind diese Steuerorgane gleichzeitig als Beschattungsvorrichtung für die Fenster od. dgl. vorgesehen.

Die DE-OS 20 49 724 zeigt außerdem ein Kühl- oder Lüftungssystem für Bauwerke, bei denen die Wandung und das Dach aus Doppelplatten bestehen und Lufträume bilden. Im Bereich des Dachfirstes ist eine durch einen Dachreiter abgedeckte Öffnung der Lufträume vorgesehen und im unteren Bereich gibt es Regulierklappen, womit erreicht werden soll, daß im Sommer die sich erwärmende Luft zwischen den Doppelplatten hochsteigt und kühle Luft nachsaugt, um die Innenwand zum Wohnraum hin kühl zu halten, und im Winter läßt sich dann in diese Lufträume Warmluft einleiten. Durch die im Bodenbereich der Doppelplatten vorgesehenen Klappen und durch die Einstellung des Dachreiters kann dabei die Luftströmung reguliert werden.

GemäB der DE-OS 35 08 876 wird vorgeschlagen, zur gleichmäßigen Klimatisierung von Räumen und zum Ausgleich der Sonneneinstrahlung bei einem Gebäude auf mindestens einer sonnenzugewandten Seite des Gebäudes eine sonnenwärmeaufnehmende Einrichtung anzuordnen und die aufgenommene Wärme zur sonnenabgewandten Seite des Gebäudes zu führen, wodurch eine sinnvolle Ausnutzung des vorhandenen Wärmepotentials, insbesondere in den gemäßigten Zonen angestrebt wird.

Bei Hochhäusern bzw. Höchsthäusern, insbesondere auch in südlichen und sonnenreichen Gebieten, wurde festgestellt, daß es ohne eine äußere Beschattung der Außenhülle des Gebäudes zu einem Aufheizen der Gebäudehülle kommt und damit auch die Umgebungsluft nahe der äußeren Gebäudehülle miterhitzt wird. Es entsteht ein mehr oder weniger stark ausgebildeter Auftrieb in unmittelbarer Gebäudenähe, wobei dieser Auftrieb in der Lage ist, Luft aus den unteren Zonen mit ihren Schadstoffen, wie Staub und Gase usw., hochzureißen und in jene Bereiche zu befördern, in denen Fenster oder Ansauggebläse zur Belüftung von Räumen angeordnet sind. Dadurch wird die Möglichkeit einer natürlichen Belüftung, z. B. durch ein Öffnen eines Fensters, aufgehoben, was besonders nachteilig ist, wenn wegen der damit verbundenen gesundheitsschädlichen Nebeneffekte und des hohen Energieverbrauches auf eine Klimaanlage verzichtet werden soll.

Der Erfindung liegt daher die Aufgabe zugrunde, die bei Hoch- und Höchsthäusern durch die außen an der Gebäudehülle aufsteigende Luft sich bildenden Luftwalzen zu zerstören und die Voraussetzungen für eine natürliche Belüftung des Gebäudeinneren zu schaffen. Außerdem soll die Möglichkeit geboten werden, die Energie des in den Strömungskanälen auftretenden Luftstromes wirkungsvoll nutzen zu können.

Die Erfindung löst diese Aufgabe dadurch, daß die Strömungskanäle mit über die Höhe verteilt angeordneten, außenluftzugänglichen Ansaugöffnungen versehen sind.

Vorteilhafte Ausgestaltungen des Erfindungsgegenstandes ergeben sich aus den Unteransprüchen.

Durch die über die Höhe verteilten Ansaugöffnungen und auf Grund des hinter diesen Ansaugöffnungen in den Strömungskanälen wirkenden Auftriebes wird stets in allen Höhenbereichen Luft von außen in die Kanäle eingesaugt und ein Hochsteigen der Umgebungsluft außen an der Gebäudehülle verhindert. Je stärker dabei die Erwärmung der Gebäudehülle ist, umso stärker wird der Auftrieb in den Strömungskanälen und gleichzeitig damit wieder die Ansaugkraft, die durch die Ansaugöffnungen auf die Umgebungsluft wirkt. Das Entstehen einer aufsteigenden Luftwalze an der Außenseite der Gebäudehülle wird von vornherein unterbunden und durch die Mehrzahl der in Strömungsrichtung hintereinandergereihten Ansaugöffnungen ist gewährleistet, daß die entstehende Thermosyphonwirkung innerhalb der Kanäle durch die sich selbst regelnde Luftversorgung von außen unabhängig von der Höhe erhalten bleibt und der Auftrieb nicht zum Erliegen kommt. Die durch die eingestrahlte Sonnenenergie über die Gebäudehülle erwärmte Umgebungsluft des Gebäudes und die sich hieraus ergebende, aufsteigende Luftströmung läßt sich daher doppelt verwerten, indem einerseits die Luftwalze vor der Gebäudehülle bekämpft und anderseits die Energie der aufströmenden Luft zu verschiedenen Zwecken, z. B. zur Be- oder Entlüftung der Gebäudeinnenräume genutzt wird. Dabei spielt es an sich keine Rolle, wie die Gebäudehülle konstruktiv ausgestaltet ist, sie kann durchgehend, teilweise unterbrochen oder überhaupt in einzelne Schachtelemente aufgelöst sein, sie kann aus lichtdurchlässigen und/oder lichtundurchlässigen Wandteilen bestehen od. dgl.. Wichtig ist nur, daß die Gebäudehülle die erforderlichen Strömungskanäle mit der Mehrzahl von Ansaugöffnungen aufweist, wobei auch hier wiederum die Ausgestaltung der Kanäle, sei es durch eigene Rohrleitungen oder durch Trennwände in Zwischenräumen od. dgl., und die Ausbildung der Ansaugöffnungen, die einfache Fugen und Schlitze, aber auch spezielle, mit Regelorganen versehene Ansaugeinrichtungen sein können, weitgehend frei wählbar und an die jeweiligen Gegebenheiten anpaßbar sind.

In den Strömungskanälen können Einrichtungen vorgesehen sein, um die aufsteigende Luft vor ihrem Ein- oder Austritt zu behandeln, z. B. zu filtern, zu entfeuchten oder einer Wärmerückgewinnungsanlage zuzuführen, was besonders für Hochhäuser im Winter bei Sonneneinstrahlung auf der Nordhalbkugel zweckmäßig sein kann. Auch kann in den Strömungskanälen eine Energiegewinnungsanlage eingesetzt sein, beispielsweise eine Walzenturbine, um damit die Strömungsenergie beispielsweise zur Stromgewinnung zu nutzen. Auch kann die aufsteigende Warmluft in Zonen geringerer Temperatur abgeleitet werden, z. B. kann die Luft von der Südseite eines Hochhauses zur Nordseite umgeleitet werden, wo dann etwa eine Entfeuchtung der Luft automatisch erfolgt.

Ein sehr wesentlicher Effekt ist auch darin zu sehen, daß der in den Strömungskanälen herrschende natürliche Auftrieb zum Absaugen verbrauchter Luft aus dem Gebäude genutzt wird. Hiefür können z. B. die Fensterbereiche mit entsprechenden Ansaugöffnungen ausgerüstet sein, die regelbar sind und mit den Strömungskanälen in Verbindung stehen. Die ins Innere nachströmende Luft wird zweckmäßigerweise aus Bereichen guter Luftverhältnisse abgezogen werden, was z. B. durch einen gemeinsamen Ansaugkanal vom oberen Gebäudebereich her erfolgen kann. Wird so der natürliche Auftrieb in den Strömungskanälen dazu genutzt, um Schlechtluft aus den Räumen abzusaugen, besteht erfindungsgemäß auch die Möglichkeit, diese verbrauchte Luft im Austrittsbereich der Kanäle zu reinigen und entsprechend zu behandeln, so daß diese aufbereitete Luft als Frischluft wieder der Gebäudelüftung zugeführt werden kann, was zu einem umweltfreundlichen, vorteilhaften Luftkreislauf führt.

Da die Außenluftwalze zerstört ist und die schadstoffreiche Außenluft in den Strömungskanälen abgezogen wird, befindet sich im Nahbereich der Gebäudehülle gute, schadstofffreie Außenluft und es ist möglich, das Gebäude durch einfaches Fensteröffnen natürlich zu belüften.

Da es möglich ist, die Luftfeutigkeit der in den Strömungskanälen hochsteigenden Luft zur Tauwassererzeugung zu nutzen, läßt sich das gewonnene Wasser zu Bewässerung von Pflanzenzonen usw. heranziehen. Vorteilhaft ist es dabei, wenn das gewonnene Tauwasser in einem das Gebäude umgebenden Teich so gesammelt wird, daß es dort durch die Sonnenstrahlung verdunstet und damit den Auftrieb in den Strömungskanälen fördert.

Sind regelbare Querkanäle vorgesehen, die die Strömungskanäle miteinander verbinden, läßt sich die hochsteigende Luft über die ganze Gebäudeaußenseite verteilen und auch an sonnenabgewandten Gebäudeseiten für gewünschte Auftriebs- und Temperaturverhältnisse sorgen. Der starke Auftrieb an der Sonnenseite des Gebäudes kann so auch für die schattigeren Gebäudeseiten genützt werden und auch hier zum Entstehen der gewünschten Thermosyphonwirkung beitragen.

Die sich von unten nach oben erstreckenden Strömungskanäle verlaufen neben den Fenstern, so daß im Fensterbereich Toträume entstehen, die sich sehr stark aufwärmen können. Um hier eine entsprechende Lüftung zu erreichen, werden diese abgeschotteten Räume über Überströmkanäle an die benachbarten Strömungskanäle angeschlossen, was den gewünschten Luftabzug sicherstellt. Werden die Überströmkanäle, die selbstverständlich auch einfache Überströmöffnungen in den Schottwänden sein können oberhalb der Fensterbereich in die Strömungskanäle eingebunden, läßt sich auf einfach Weise verhindern, daß Schlechtluft aus den Strömungskanälen in die Fensterbereiche hineingedrückt wird.

Zur Steigerung des Auftriebes und zur Erhöhung der Thermosyphonwirkung können die Strömungskanäle mit sich unter Sonneneinstrahlung aufheizenden Werkstoffen ausgestattet sein, sie können auch Sonnenkollektoren od. dgl. oder andere Energiegewinnungsanlagen aufnehmen, so daß sich die gewonnene Energie sofort zur Klimatisierung oder Steuerung des Auftriebes od. dgl. heranziehen läßt und ein wirtschaftlicher Betrieb gewährleistet ist.

In der Zeichnung ist ein Ausführungsbeispiel eines erfindungsgemäßen Hochhauses rein schematisch veranschaulicht, und zwar zeigen
- Fig. 1: ein erfindungsgemäßes Hochhaus im Schaubild,
- Fig. 2 - 5: einen Teil dieses Hochhauses in Vorderansicht bzw. im Schnitt nach den Linien A-A, B-B und C-C der Fig. 2 und
- Fig. 6: einen Ausschnitt aus einem Gebäudewandteil wiederum im Schaubild.

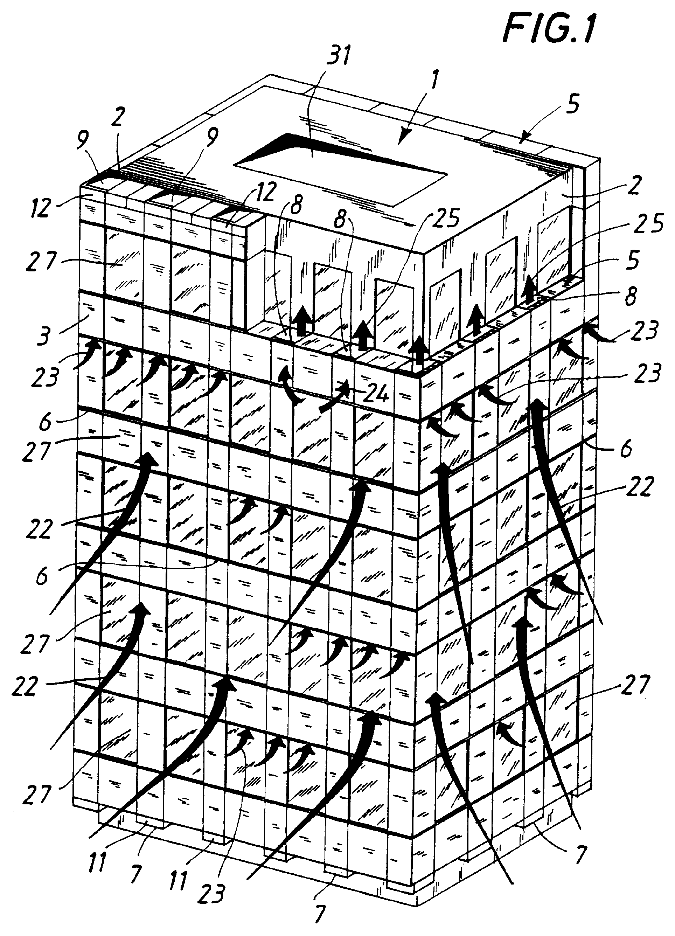

Wie in Fig. 1 angedeutet, weist das Kerngebäude eines Hochhauses 1 eine Gebäudeaußenwand 2 und eine dieser vorgelagerte Gebäudehülle 3 auf, so daß zwischen der Außenseite der Gebäudeaußenwand 2 und der Innenseite der Gebäudehülle 3 ein Hinterlüftungs-Zwischenraum 5 entsteht. Durch Trennwände 4 wird dieser Zwischenraum 5 in einzelne, der Höhe nach verlaufende Strömungskanäle 8 unterteilt, welche Kanäle 8 jeweils zwischen den vertikalen Fensterreihen verlaufen. Die Strömungskanäle 8 weisen neben unteren Eintrittsöffnungen 7 und oberen Austrittsöffnungen 9 der Höhe nach verteilt angeordnete außenluftzugängliche Ansaugöffnungen 6 auf, die beispielsweise aus Fugenschlitzen der Gebäudehülle 3 bestehen und vorteilhafterweise über Regeleinrichtungen 10 in ihrer Öffnungsgröße eingestellt werden können. Um die einströmende Luft zu behandeln, können den Eintrittsöffnungen 7 und/oder den Austrittsöffnungen 9 Einrichtungen 11 zur Filtrierung, Entfeuchtung, Temperierung od. dgl. zugeordnet sein und zur Nutzung der Strömungsenergie od. dgl. können ausgangsseitig entsprechende Energiegewinnungseinrichtungen 12, wie Walzenturbinen od. dgl. installiert werden.

Durch die Erwärmung der Gebäudehülle 3 kommt es zu einem Auftrieb der Umgebungsluft (Pfeile 22) und in den Strömungskanälen 8 (Pfeile 25). Da diese Strömungskanäle über die Ansaugöffnungen 6 entlang der gesamten Gebäudehöhe Außenluft ansaugen (Pfeile 23) wird dafür gesorgt, daß einerseits der Auftrieb in den Strömungskanälen 8 (Pfeile 25) durch die ständige Luftzufuhr aufrecht bleibt und sogar verstärkt wird und anderseits durch das Absaugen der Gebäudeumgebungsluft das Hochsteigen schadstoffhältiger Luft entlang der Gebäudehülle 3 verhindert wird. Es kann zu keiner unerwünschten Luftwalze im Außenbereich des Gebäudes mehr kommen und die in die Strömungskanäle 8 abgesaugte Luft läßt sich sowohl einer reinigenden bzw. klimatisierenden Behandlung unterziehen als auch hinsichtlich ihrer Energieinhalte nutzen.

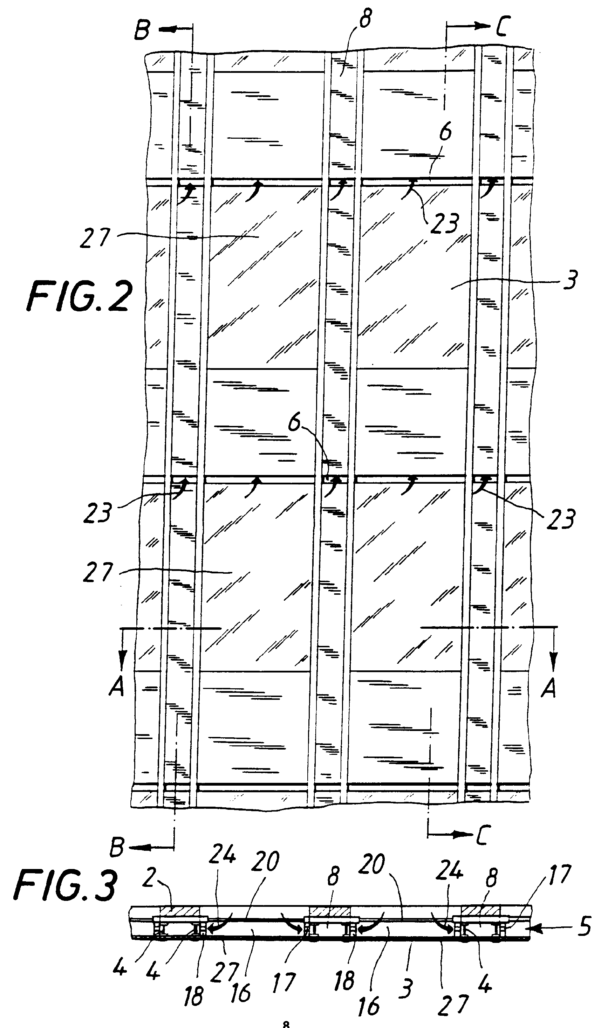

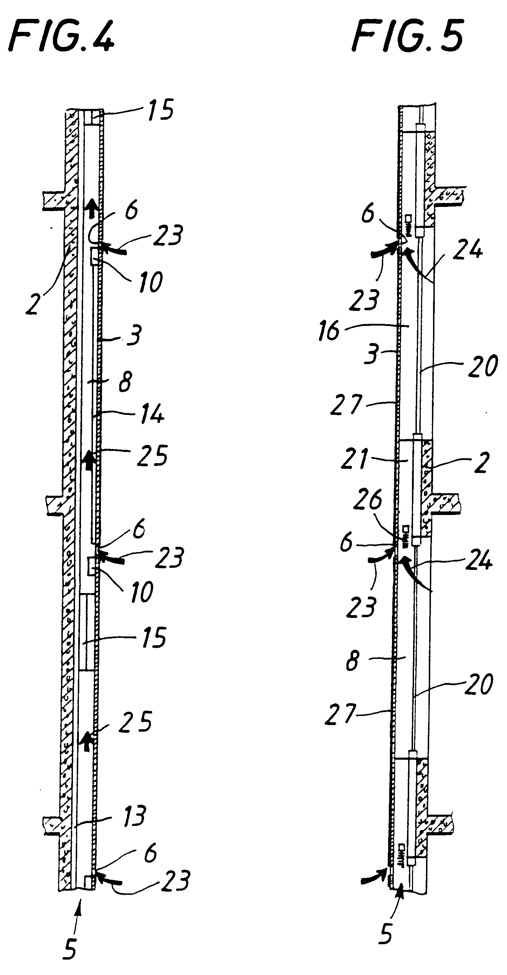

Wie in den Fig. 2 - 5 näher veranschlaulicht, ist die Gebäudehülle 3, beispielsweise eine Glasfassade, mit Abstand vor der Gebäudeaußenwand 2 montiert, wobei die Träger zur Halterung der Fassade gleichzeitig die Trennwände 4 zur Unterteilung des Zwischenraumes 5 in die einzelnen Strömungskanäle 8 bilden. Die Gebäudeaußenwand 2 kann weiters mit einer Wärmedämmung 13 belegt sein und gebäudehüllenseitig lassen sich zur Sonnenenergienutzung Einrichtungen 14, wie Schichten aus unter Wirkung der Sonneneinstrahlung sich aufheizenden Werkstoffen, Sonnenkollektoren, voltaische Anlagen od. dgl. vorsehen. Günstig ist es auch, wenn in die Strömungskanäle 8 Einrichtungen 15 zur Steuerung der Luftströmung, wie Gebläse, Drosselorgane u. dgl. eingebunden sind.

Um die Luftströmung in den Strömungskanälen 8 zur Beund Entlüftung des Gebäudeinneren nützen zu können, gibt es Ansaugöffnungen 17 zwischen den Strömungskanälen 8 und den abgeschotteten Fensterbereichen 16 zwischen innerem Fenster 20 in der Außenwand 2 und äußerem Fenster 27 in der Gebäudehülle 3, so daß durch ein Öffnen entsprechender Schieber od. dgl. Absperrorgane 18 Luft aus dem Inneren des Gebäudes durch die Fenster 20 in die Strömungskanäle 8 abgesaugt wird (Pfeile 24). Zur Belüftung des Gebäudes ist dabei ein Ansaugschacht 31 vorgesehen, der saubere Luft von oben ins Gebäudeinnere bringt. Für die Beschattung der Fensterbereiche können verschiedene Einrichtungen, wie Jalousien 26, vorgesehen sein, die vor Sonneneinstrahlung schützen, ohne die Entlüftung zu beeinträchtigen.

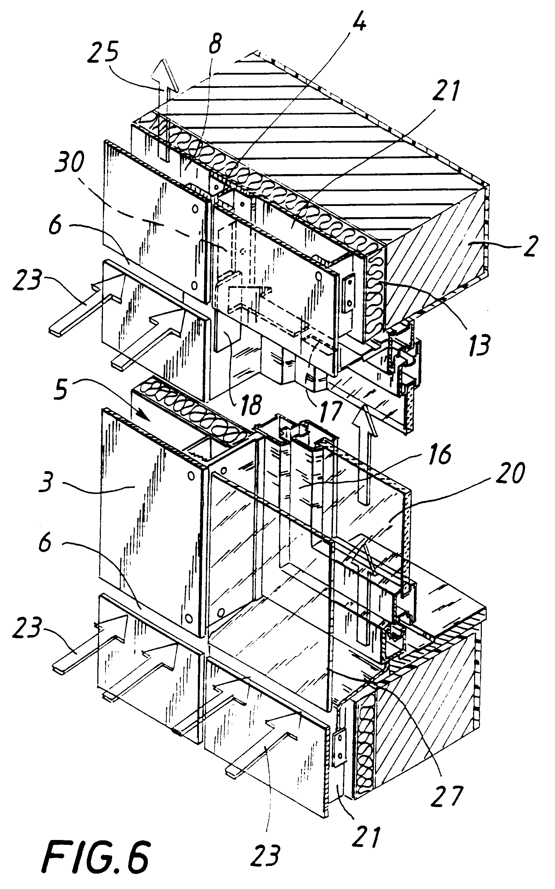

Wie aus Fig. 6 hervorgeht, sind die Fensterbereiche 16 nicht nur gegenüber den seitlich vorbeiverlaufenden Strömungskanälen 8 abgeschottet, sondern auch gegenüber den benachbarten anderen Fensterbereichen, so daß eine unerwünschte gegenseitige Beeinflußung der Fensterbereiche vermieden ist. Um die Zwischenbereiche 21 zwischen den Fenstern ebenfalls lüften zu können und hier zu starke Hitzeentwicklungen zu vermeiden, sind diese Zwischenbereiche 21 ober- und unterhalb der Fensterbereiche 16 mit Überströmöffnungen 30 ebenfalls an die Strömungskanäle 8 angeschlossen, so daß sich auch über die ganze Gebäudeaußenfläche ein entsprechender Klimatisierungseffekt erreichen läßt.

Durch eine geeignete Anordnung der Überströmöffnungen 30 können auch benachbarte Strömungskanäle 8 über die Fensterzwischenbereiche 21 miteinander in Strömungsverbindung gebracht werden, wodurch es zusammen mit einer entsprechenden Steuerung über die Regelungseinrichtungen 15 in den Strömungskanälen 8 möglich ist, die Vertikalströmung zumindest teilweise in eine Horizontalströmung umzulenken und damit auch auf der Schattenseite des Gebäudes die Auftriebsverhältnisse über die Thermosyphonwirkung an der Sonnenseite zu beeinflussen, die Temperaturverhältnisse zu vergleichmäßigen usw..

## Patentansprüche

1. Hochhaus (1) mit einer Gebäudeaußenwand (2) und einer dieser vorgelagerten Gebäudehülle (3), wobei die Gebäudehülle (3) der Höhe nach verlaufende, unten und oben Ein- bzw. Austrittsöffnungen (7, 9) aufweisende Strömungskanäle (8) zur Gebäudebe- und -entlüftung, Gebäudeklimatisierung od. dgl. bildet, dadurch gekennzeichnet, daß die Strömungskanäle (8) mit über die Höhe verteilt angeordneten, außenluftzugänglichen Ansaugöffnungen (6) versehen sind.

2. Hochhaus nach Anspruch 1, dadurch gekennzeichnet, daß die Ansaugöffnungen (6) in ihrer Öffnungsgröße regelbar sind.

3. Hochhaus nach Anspruch 1 oder 2, dadurch gekennzeichnet, daß zwischen der Gebäudehülle (3) und der Gebäudeaußenwand (2) ein Hinterlüftungs-Zwischenraum (5) besteht, der in einzelne Strömungskanäle (8) unterteilt ist.

4. Hochhaus nach Anspruch 1 oder 3, dadurch gekennzeichnet, daß der Gebäudeinnenraum über regulierbare Ansaugöffnungen (17) (Pfeil 24) mit den Strömungskanälen (8) in Verbindung steht.

5. Hochhaus nach einem der vorhergehenden Ansprüche, dadurch gekennzeichnet, daß den Strömungskanälen (8) Einrichtungen (11) zur behandlung der Luft, wie Filter, Entfeuchter, Wärmetauscher od. dgl., Einrichtungen (12) zur Ausnützung der Strömungsenergie, wie Walzenturbinen od. dgl. zugeordnet sind.

6. Hochhaus nach einem der vorhergehenden Ansprüche, dadurch gekennzeichnet, daß in die Strömungskanäle (8) Gebläseeinrichtungen und/oder Steuerorgane (15) eingebunden sind.

7. Hochhaus nach einem der vorhergehenden Ansprüche, dadurch gekennzeichnet, daß die Strömungskanäle (8) über regelbare Querkanäle (20) miteinander in Strömungsverbindung stehen.

8. Hochhaus nach einem der vorhergehenden Ansprüche, dadurch gekennzeichnet, daß die Fenster (20, 27) zwischen Gebäudeaußenwand (2) und Gebäudehülle (3) kastenförmig abgeschottet sind und die abgeschotteten Fensterbereiche (16) über Überströmöffnungen (30) oder -kanäle mit den neben den Fenstern verlaufenden Strömungskanälen (8) in Verbindung stehen.

9. Hochhaus nach Anspruch 8, dadurch gekennzeichnet, daß die Überströmöffnungen (30) oder -kanäle oberhalb und/oder unterhalb der Fenster (20) in die Strömungskanäle (8) einmünden.

10. Hochhaus nach einem der vorhergehenden Ansprüche, dadurch gekennzeichnet, daß die Strömungskanäle (8) mit sich unter der Wirkung der Sonneneinstrahlung aufheizenden Werkstoffen (14) ausgestattet oder mit unter der Wirkung der Sonneneinstrahlung aktivierbaren Einrichtungen (14), wie Sonnenkollektoren, voltaischen Anlagen od. dgl. ausgerüstet sind.

## Claims

1. A high-rise building (1) comprising an outer wall (2) in front of which there is disposed a covering wall (3), the latter forming vertically extending flow ducts (8) having entry and exit apertures (7, 9) at top and bottom for building aeration and ventilation, air-conditioning, or the like, characterised in that the flow ducts (8) are provided with intake apertures (6) which are distributed over the height and which are accessible to the external air.

2. A high-rise building according to claim 1, characterised in that the size of the opening of the intake apertures (6) is controllable.

3. A high-rise building according to claim 1 or 2, characterised in that a back ventilation space (5) exists between the covering wall (3) and the outer wall (2) of the building and is divided into individual flow ducts (8).

4. A high-rise building according to claim 1 or 3, characterised in that the building interior communicates with the flow ducts (8) via controllable intake apertures (17) (arrow 24).

5. A high-rise building according to any one of the preceding claims, characterised in that air treatment means (11), such as filters, dehumidifiers, heat exchangers or the like, and flow energy utilisation means (12), such as roller turbines or the like, are associated with the flow ducts (8).

6. A high-rise building according to any one of the preceding claims, characterised in that blower means and/or control means (15) are incorporated in the flow ducts (8).

7. A high-rise building according to any one of the preceding claims, characterised in that the flow ducts (8) are interconnected as to the flow by way of controllable transverse ducts (20).

8. A high-rise building according to any one of the preceding claims, characterised in that the windows (20, 27) between the outer wall (2) and the covering wall (3) are bulkheaded box-fashion and the bulkheaded window zones (16) communicate via transfer apertures (30) or ducts with the flow ducts (8) extending adjacent the windows.

9. A high-rise building according to claim 8, characterised in that the transfer apertures (30) or ducts lead into the flow ducts (8) above and/or beneath the windows (20).

10. A high-rise building according to any one of the preceding claims, characterised in that the flow ducts (8) are fitted out with materials (14) which heat up by the effect of solar radiation or are equipped with means (14) activatable by the effect of solar radiation, such as solar collectors, voltaic installations, or the like.

## Revendications

1. Bâtiment-tour (1), avec une paroi extérieure (2) de bâtiment et une enveloppe (3) de bâtiment, placée devant celle-ci, l'enveloppe (3)) de bâtiment formant des canaux (8) d'écoulement, s'étendant en hauteur, présentant en partie basse ou haute des ouvertures d'entrée et/ou de sortie (7, 9), en vue d'assurer l'aération et le désaérage du bâtiment, sa climatisation ou analogue,
caractérisé en ce que les canaux d'écoulement (8) sont pourvus d'ouvertures (6) d'aspiration réparties sur la hauteur, accessibles à l'air extérieur.

2. Bâtiment-tour selon la revendication 1,
caractérisé en ce que le degré d'ouverture des ouvertures d'aspiration (6) est réglable.

3. Bâtiment-tour selon la revendication 1 ou 2,
caractérisé en ce qu'entre l'enveloppe (3) de bâtiment et la paroi extérieure (2) de bâtiment est prévu un espace intermédiaire (5) d'aération arrière, subdivisé en canaux individuels (8) d'écoulement.

4. Bâtiment-tour selon la revendication 1 ou 3,
caractérisé en ce que l'espace intérieur de bâtiment est relié aux canaux (8) d'écoulement par l'intermédiaire d'orifices (17) d'aspiration (17) réglables (flèche 24).

5. Bâtiment-tour selon l'une des revendications précédentes,
caractérisé en ce que des dispositifs (11) destinés au traitement de l'air, tels que des filtres, des déshumidificateurs, des échangeurs de chaleur ou analogues, des dispositifs (12) destinés à exploiter l'énergie contenue dans les écoulements, tels que des turbines éoliennes ou analogues, sont associés aux canaux (8) d'écoulement.

6. Bâtiment-tour selon l'une des revendications précédentes,
caractérisé en ce que des dispositifs de soufflage et/ou des organes de commande (12) sont intégrés aux canaux (8) d'écoulement.

7. Bâtiment-tour selon l'une des revendications précédentes,
caractérisé en ce que les canaux d'écoulement (8) sont reliés hydrauliquement ensemble par l'intermédiaire de canaux transversaux (20) pouvant être soumis à l'action d'une régulation.

8. Bâtiment-tour selon l'une des revendications précédentes,
caractérisé en ce que les fenêtres (20, 27 sont encloisonnées de façon étanche, en formant des caissons, entre la paroi extérieure de bâtiment (2) et l'enveloppe de bâtiment (3) et les zones de fenêtre (16) encloisonnées sont reliées, par l'intermédiaire d'orifices ou de canaux d'échappement d'écoulement (30), aux canaux d'écoulement (8) s'étendant à côté des fenêtres.

9. Bâtiment-tour selon la revendication 8
caractérisé en ce que les orifices ou canaux d'échappement d'écoulement (30) débouchent dans les canaux d'écoulement (8), au-dessus et/ou au-dessous des fenêtres (20).

10. Bâtiment-tour selon l'une des revendications précédentes,
caractérisé en ce que les canaux (8) d'écoulement sont équipés de matériaux (14) produisant un chauffage sous l'effet du rayonnement solaire, ou sont équipés de dispositifs (14) susceptibles d'être activés sous l'effet du rayonnement so- laire, tels que des installations voltaïques ou analogues.
